# EUROPEAN PATENT APPLICATION

(11) **EP 3 936 528 A1**
(43) Date of publication of application: **12.01.2022**
(21) Application number: 20770598.9
(22) Date of filing: 06.03.2020
(51) Int. Cl.: C08C 19/00, C08L 27/18, C08K 3/011

(54) **COMPOSITION, CROSSLINKED RUBBER, AND PRODUCTION METHOD THEREFOR**

(30) Priority: 08.03.2019 JP 2019042727
(71) Applicant: AGC INC., Chiyoda-ku, Tokyo 1008405 (JP)
(72) Inventor: YAGI, Keisuke, Tokyo 100-8405 (JP)
(74) Representative: Müller-Boré & Partner Patentanwälte PartG mbB
(86) International application number: PCT/JP2020/009661
(87) International publication number: WO 2020/184429

(57) **Abstract**

To provide a method for producing crosslinked rubber excellent in tensile strength and transparency.

The method for producing crosslinked rubber of the present invention is a method for producing crosslinked rubber, which comprises crosslinking a fluorinated copolymer in a composition containing the fluorinated copolymer, a crosslinking agent, a crosslinking co-agent and an acid acceptor, wherein the fluorinated copolymer is a copolymer having units based on tetrafluoroethylene and units based on propylene, in the composition, the content of the crosslinking agent is from 0.03 to 1.5 parts by mass to 100 parts by mass of the fluorinated copolymer, the content of the crosslinking co-agent is from 0.1 to 3.5 parts by mass to 100 parts by mass of the fluorinated copolymer, and the total light transmittance of the crosslinked rubber is from 60 to 100%.

## Description

### TECHNICAL FIELD

The present invention relates to a composition, crosslinked rubber and a method for its production.

### BACKGROUND ART

Crosslinked rubber having a fluorinated copolymer crosslinked (so-called fluororubber) is excellent in heat resistance, chemical resistance, oil resistance, weather resistance, etc. and thus is widely used in the fields of vehicles, ships, aircraft, general machinery, construction, etc., as sealing materials (e.g. O-rings, packing, oil seals, gaskets) and cushioning materials.

As a method of producing such crosslinked rubber, Patent Document 1 discloses a method of obtaining crosslinked rubber by crosslinking a composition containing a fluorinated copolymer having units based on tetrafluoroethylene and units based on propylene, an organic peroxide (crosslinking agent) and a crosslinking co-agent.

### PRIOR ART DOCUMENT

### PATENT DOCUMENT

Patent Document 1: WO2009/119202

### DISCLOSURE OF INVENTION

### TECHNICAL PROBLEM

In recent years, there has been a demand for transparent crosslinked rubber in various fields. For example, in chemical plants, use of components made of transparent crosslinked rubber has such an advantage that visibility from the outside will be improved, whereby detection of abnormalities in manufacturing and maintenance of equipment will be easy. Further, in a case where the crosslinked rubber is transparent, it may also be used as a material for microfluidic devices in biomimetic chips. This is because microfluidic devices are required to have chemical resistance and softness like living organisms, as well as transparency to observe the state of cells from the outside.

Further, as one of the rubber properties required for crosslinked rubber, being excellent in tensile strength may be mentioned.

With respect to these requirements, the present inventor evaluated crosslinked rubbers such as those described in Patent Document 1, and found that depending on the composition used in the production of the crosslinked rubber, there was room for improvement in transparency, although the tensile strength was excellent.

The present invention has been made in consideration of the above problem, and the object is to provide crosslinked rubber excellent in tensile strength and transparency, and a method for its production.

### SOLUTION TO PROBLEM

As a result of an extensive study on the above problem, the present inventor has found that crosslinked rubber excellent in tensile strength and transparency can be obtained if in crosslinked rubber having a fluorinated copolymer in a composition crosslinked, the contents of a crosslinking agent and a crosslinking co-agent in the composition are set within specific ranges to the content of the fluorinated copolymer, and thus have arrived at the present invention.

That is, the present inventor has found that the above problem can be solved by the following construction.
[1] A composition comprising a fluorinated copolymer, a crosslinking agent, a crosslinking co-agent and an acid acceptor, characterized in that
   the fluorinated copolymer is a copolymer having units based on tetrafluoroethylene and units based on propylene,
   in the composition, the content of the crosslinking agent is from 0.03 to 1.5 parts by mass to 100 parts by mass of the fluorinated copolymer, and
   in the composition, the content of the crosslinking co-agent is from 0.1 to 3.5 parts by mass to 100 parts by mass of the fluorinated copolymer.
[2] The composition according to [1], wherein the acid acceptor is at least one member selected from the group consisting of zinc oxide, magnesium oxide, and a fatty acid metal salt represented by the following formula (A4):

   (R^{A}COO⁻)ₙMⁿ⁺ (A4)

   in the formula, R^{A} represents a C₁₀₋₃₀ organic group, n is an integer of 2 or 3, and M is an alkaline earth metal, Zn, Cd, Co, Sn, Cu, Pb, Ni or Al.
[3] The composition according to [1] or [2], wherein the fluorinated copolymer has iodine atoms, and
   in the composition, the mass ratio of the content of the iodine atoms to the content of the crosslinking agent is from 0.20 to 4.0.
[4] The composition according to any one of [1] to [3], wherein the fluorinated copolymer has iodine atoms, and
   in the composition, the mass ratio of the content of the iodine atoms to the content of the crosslinking co-agent is from 0.05 to 2.5.
[5] The composition according to any one of [1] to [4], wherein in the composition, the mass ratio of the content of the crosslinking agent to the content of the crosslinking co-agent is from 0.01 to 8.5.
[6] Crosslinked rubber having the fluorinated copolymer in the composition as defined in any one of [1] to [5] crosslinked.
[7] A method for producing crosslinked rubber characterized by crosslinking a fluorinated copolymer in a composition comprising the fluorinated copolymer, a crosslinking agent, a crosslinking co-agent and an acid acceptor, wherein
   the fluorinated copolymer is a copolymer having units based on tetrafluoroethylene and units based on propylene,
   in the composition, the content of the crosslinking agent is from 0.03 to 1.5 parts by mass to 100 parts by mass of the fluorinated copolymer,
   in the composition, the content of the crosslinking co-agent is from 0.1 to 3.5 parts by mass to 100 parts by mass of the fluorinated copolymer, and
   the total light transmittance of the crosslinked rubber is from 60 to 100%.
8. A composition comprising a fluorinated copolymer, a crosslinking agent and a crosslinking co-agent, characterized in that
   the fluorinated copolymer is a copolymer having units based on tetrafluoroethylene and units based on a perfluoro(alkyl vinyl ether),
   in the composition, the content of the crosslinking agent is from 0.03 to 0.7 parts by mass to 100 parts by mass of the fluorinated copolymer, and
   in the composition, the content of the crosslinking co-agent is from 0.1 to 2.5 parts by mass to 100 parts by mass of the fluorinated copolymer.
[9] The composition according to [8], wherein the fluorinated copolymer has iodine atoms, and
   in the composition, the mass ratio of the content of the iodine atoms to the content of the crosslinking agent is from 0.3 to 1.2.
[10] The composition according to [8] or [9], wherein the fluorinated copolymer has iodine atoms, and
   in the composition, the mass ratio of the content of the iodine atoms to the content of the crosslinking co-agent is from 0.3 to 1.2.
[11] The composition according to any one of [8] to [10], wherein in the composition, the mass ratio of the content of the crosslinking agent to the content of the crosslinking co-agent is from 0.4 to 7.
[12] The composition according to any one of [8] to [11], wherein in the composition, the total content of components other than the fluorinated copolymer is from 0.5 to 20 parts by mass to 100 parts by mass of the fluorinated copolymer.
[13] Crosslinked rubber having the fluorinated copolymer in the composition as defined in any one of [8] to [12] crosslinked.
[14] A method for producing crosslinked rubber characterized by crosslinking a fluorinated copolymer in a composition containing the fluorinated copolymer, a crosslinking agent and a crosslinking co-agent, wherein
   the fluorinated copolymer is a copolymer having units based on tetrafluoroethylene and units based on a perfluoro(alkyl vinyl ether),
   in the composition, the content of the crosslinking agent is from 0.03 to 0.7 parts by mass to 100 parts by mass of the fluorinated copolymer,
   in the composition, the content of the crosslinking co-agent is from 0.1 to 2.5 parts by mass to 100 parts by mass to the fluorinated copolymer, and
   the total light transmittance of the crosslinked rubber is from 70 to 100%.

### ADVANTAGEOUS EFFECTS OF INVENTION

According to the present invention, it is possible to provide crosslinked rubber excellent in tensile strength and transparency, and a method for its production.

### DESCRIPTION OF EMBODIMENTS

The meanings of terms in the present invention are as follows.

A "unit" in a copolymer is a generic term for an atomic group directly formed by polymerization of a monomer and derived from a single molecule of the above monomer, and an atomic group obtained by chemical conversion of a portion of the above atomic group. "Units based on a monomer" may hereinafter be simply referred to also as "units".

"Rubber" means rubber showing properties defined by JIS K 6200 (2008), and is distinguished from "resin".

In the following, the method for producing crosslinked rubber of the present invention will be described for each embodiment.

### [First embodiment]

Crosslinked rubber in the first embodiment of the present invention is crosslinked rubber (hereinafter referred to also as "rubber A") obtainable by crosslinking a fluorinated copolymer (hereinafter referred to also as "copolymer A") in a composition (hereinafter referred to also as "composition A") comprising the copolymer A, a crosslinking agent, a crosslinking co-agent and an acid acceptor, wherein in the composition A, the content of the above crosslinking agent is from 0.03 to 1.5 parts by mass to 100 parts by mass of the above copolymer A, and in the above composition A, the content of the above crosslinking co-agent is from 0.1 to 3.5 parts by mass to 100 parts by mass of the above copolymer A, and the total light transmittance of the above rubber A is from 60 to 100%.

The crosslinked rubber of the first embodiment is excellent in tensile strength and transparency. The details of the reason for this have not been clarified, but it is assumed to be due to the following reason.

As compared to e.g. a silicon resin, a fluorinated copolymer tends to undergo crystallization partially by crosslinking. Therefore, in the crosslinked rubber having the fluorinated copolymer crosslinked, as the number of crosslinked structures increases, microcrystalline portions tend to be formed, and as a result, the crosslinked rubber is considered to appear opaque.

Therefore, the inventor has found that by reducing the contents of the crosslinking agent and crosslinking co-agent used in crosslinking the fluorinated copolymer as compared to the conventional method, it is possible to obtain crosslinked rubber excellent in transparency while maintaining excellent tensile strength. That is, by reducing the contents of the crosslinking agent and crosslinking co-agent to such an extent that the properties of the rubber are not lost, it is assumed that the microcrystalline portions in the crosslinked rubber are reduced while retaining the crosslinking points to such an extent that the excellent tensile strength is maintained, and rubber excellent in transparency is obtained.

With respect to crosslinked rubber of the first embodiment, description will be made with respect to the composition to be used in the production of the crosslinked rubber, and then, description will be made with respect to the crosslinked rubber and the method for its production.

### [Composition A]

Composition A comprises copolymer A, a crosslinking agent, a crosslinking co-agent and an acid acceptor.

### <Copolymer A>

Copolymer A is a copolymer having tetrafluoroethylene (hereinafter referred to as "TFE") units and propylene (hereinafter referred to as "P") units.

Copolymer A may have units based on monomers other than TFE and P, and examples thereof may be units based on a monomer represented by the following formula (A1) (hereinafter referred to also as "formula (A1) units"), units based on a monomer represented by the following formula (A2) (hereinafter referred to also as "formula (A2) units"), perfluoro(alkyl vinyl ether) (hereinafter referred to also as "PAVE") units, vinylidene fluoride (hereinafter referred to also as "VdF") units, hexafluoropropylene (hereinafter referred to also as "HFP") units, chlorotrifluoroethylene (hereinafter referred to also as "CTFE") units, and ethylene units. Among these, formula (A1) units, PAVE units and VdF units are preferred.

Formula (A1) is as follows.

(CR¹R²=CR³)ₐR⁴ (A1)

In the formula (A1), R¹, R² and R³ each independently represent a hydrogen atom, a fluorine atom or a methyl group, a is an integer of from 2 to 6, and R⁴ is an a-valent C₁₋₁₀ perfluorohydrocarbon group, or a group having an etheric oxygen atom at a terminal or between carbon-carbon atoms of the perfluorohydrocarbon group.
a is preferably 2 or 3, and 2 is particularly preferred.

The plurality of R¹, the plurality of R², and the plurality of R³ may be the same or different from each other, and it is particularly preferred that they are the same as each other.

From the viewpoint of improving the crosslinking reactivity and heat resistance of copolymer A, it is preferred that R¹, R² and R³ are fluorine atoms or hydrogen atoms, and it is more preferred that all of R¹, R² and R³ are fluorine atoms, or all of them are hydrogen atoms, and it is particularly preferred that all of R¹, R² and R³ are fluorine atoms.

R⁴ may be any of linear, branched or cyclic; linear or branched is preferred; linear is particularly preferred. The number of carbon atoms in R⁴ is preferably from 2 to 8; more preferably from 3 to 7; further preferably from 3 to 6; and particularly preferably from 3 to 5. Further, the number of etheric oxygen atoms in R⁴ is preferably from 0 to 3, and particularly preferably 1 or 2. 1 or 2 etheric oxygen atoms are preferably present at the terminals of the perfluoroalkylene group. When R⁴ is within these preferred ranges, the tensile strength of rubber A will be superior, and the compression set at high temperatures will be smaller.

A specific example of the monomer represented by the formula (A1) may be a compound in which a vinyl group or a trifluorovinyl group is bonded to each of the two terminals of a C₁₋₁₀ perfluoroalkylene group, either via or without via an etheric oxygen.

Specific examples of the monomer represented by the formula (A1) may be CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CH₂=CH(CF₂)₆CH=CH₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, and CF₂=CFOCF₂CF₂O(CF₂O)₂CF₂CF₂OCF=CF₂.

Preferred specific examples of the monomer represented by the formula (A1) may be CF₂=CFO(CF₂)₃OCF=CF₂ (hereinafter referred to also as "C3DVE"), CF₂=CFO(CF₂)₄OCF=CF₂ (hereinafter referred to also as "C4DVE" or "PBDVE") and CH₂=CH(CF₂)₆CH=CH₂ (hereinafter referred to also as "C6DV").

When copolymer A has at least one type of units based on these monomers, it is excellent in crosslinking reactivity, and rubber A after crosslinking will be superior in tensile strength, and the compression set at high temperatures will be smaller.

When the monomer represented by the formula (A1) is copolymerized, some of polymerizable double bonds at both terminals of the monomer represented by the formula (A1) react during the polymerization, whereby copolymer A having a branched chain will be obtained.

The formula (A2) is as follows.

CF₂=CF-O-R^{f} (A2)

In the formula (A2), R^{f} represents a C₁₋₈ perfluoroalkyl group containing an etheric oxygen atom. The number of carbon atoms in R^{f} is preferably from 1 to 6, particularly preferably from 1 to 5.

Specific examples of the monomer represented by the formula (A2) may be perfluoro(3,6-dioxa-1-heptene), perfluoro(3,6-dioxa-1-octene) and perfluoro(5-methyl-3,6-dioxa-1-nonene).

As PAVE, the monomer represented by the following formula (A3) is preferred.

CF₂=CF-O-R^{f1} (A3)

In the formula (A3), R^{f1} represents a C₁₋₈ perfluoroalkyl group. The number of carbon atoms in R^{f1} is preferably from 1 to 6, particularly preferably from 1 to 5.

Specific examples of PAVE may be perfluoro(methyl vinyl ether) (hereinafter referred to also as "PMVE"), perfluoro(ethyl vinyl ether) (hereinafter referred to also as "PEVE"), perfluoro(propyl vinyl ether) (hereinafter referred to also as "PPVE"), and among these, PMVE and PPVE are preferred.

The content of TFE units is preferably from 30 to 70 mol%, particularly preferably from 40 to 60 mol%, to all units in the copolymer A.

When the copolymer A has formula (A1) units, the content thereof is preferably from 0.03 to 0.5 mol%, more preferably from 0.05 to 0.4 mol%, particularly preferably from 0.1 to 0.3 mol %, to all units in the copolymer A. When it is at least the lower limit value in the above range, the crosslinking reactivity will be excellent, and the rubber A will be excellent in tensile strength, and the compression set at high temperatures will be smaller. When it is at most the upper limit value in the above range, while maintaining the excellent physical properties as crosslinked rubber, it is possible to suppress occurrence of cracking when stress such as bending is applied under high temperatures.

When the copolymer A has PAVE units, the content thereof is preferably from 1 to 40 mol%, particularly preferably from 10 to 30 mol%, to all units in the copolymer A.

When the copolymer A has formula (A2) units, the content thereof is preferably from 5 to 50 mol%, particularly preferably from 10 to 30 mol%, to all units in the copolymer A.

The total of the content of TFE units and the content of P units, is preferably from 40 to 100 mol%, particularly preferably from 60 to 100 mol%, to all units in the copolymer A.

Suitable combinations of the respective units to be contained in the copolymer A are shown below.
Combination 1: Combination of TFE units and P units
Combination 2: Combination of TFE units, P units and PAVE units (preferably formula (A3) units, particularly preferably PPVE units or PMVE units)
Combination 3: Combination of TFE units, P units, and formula (A1) units
Combination 4: Combination of TFE units, P units, formula (A1) units and PAVE units (preferably formula (A3) units, particularly preferably PPVE units or PMVE units)
Combination 5: Combination of TFE units, P units, formula (A1) units and VdF units
Among these, from the viewpoint of elongation at break, combination 1, 2 or 3 is preferred, and combination 1 or 3 is particularly preferred.

The copolymerization compositions in combinations 1 to 5 are preferably in the following molar ratios. When the molar ratios are in the following molar ratios, the crosslinking reactivity of the copolymer will be even more excellent, and furthermore, the mechanical properties, heat resistance, chemical resistance, oil resistance and weather resistance of rubber A will be excellent.
Combination 1: TFE units/P units = 40 to 60/40 to 60 (molar ratio)
Combination 2: TFE units/P units/PAVE units = 30 to 60/10 to 40/10 to 40 (molar ratio)
Combination 3: TFE units/P units/formula (A1) units = 40 to 60/40 to 60/0.01 to 2 (molar ratio)
Combination 4: TFE units/P units/formula (A1) units/PAVE units = 40 to 60/40 to 60/0.01 to 2/10 to 20 (molar ratio)
Combination 5: TFE units/P units/formula (A1) units/VdF units = 40 to 60/40 to 60/0.01 to 2/1 to 20 (molar ratio)

The copolymerization composition in combination 3 is more preferably in the following molar ratio.

Combination 3: TFE units/P units/formula (A1) units = 40 to 59/40 to 59/0.01 to 2 (molar ratio), or TFE units/P units/formula (A1) units = 40 to 60/40 to 58/0.01 to 2 (molar ratio).

The copolymerization composition in combination 4 is more preferably in the following molar ratio.

Combination 4: TFE units/P units/formula (A1) units/PAVE units = 40 to 58/40 to 50/0.01 to 2/10 to 20 (molar ratio).

The copolymerization composition in combination 5 is more preferably in the following molar ratio.

Combination 5: TFE units/P units/formula (A1) units/VdF units = 40 to 58/40 to 58/0.01 to 2/1 to 20 (molar ratio).

The copolymer A may also have units based on other monomers other than those listed above. Such other monomers may be a fluorinated monomer and a non-fluorinated monomer.

Specific examples of the fluorinated monomer may be vinyl fluoride, pentafluoropropylene, perfluorocyclobutene, and (perfluoroalkyl)ethylenes such as CH₂=CHCF₃, CH₂=CHCF₂CF₃, CH₂=CHCF₂CF₂CF₃, CH₂=CHCF₂CF₂CF₂CF₃ and CH₂=CHCF₂CF₂CF₂CF₂CF₃.

Specific examples of the non-fluorinated monomer may be α-olefins such as isobutylene and pentene, vinyl ethers such as methyl vinyl ether, ethyl vinyl ether, propyl vinyl ether and butyl vinyl ether, and vinyl esters such as vinyl acetate, vinyl propionate, vinyl butyrate, vinyl caproate and vinyl caprylate.

When the copolymer A has units based on other monomers, the content thereof is preferably from 0.001 to 2.0 mol%, more preferably from 0.01 to 1.0 mol%, particularly preferably from 0.01 to 0.5 mol%, to all units in the copolymer A.

As other monomers, monomers having iodine atoms may be used. When a monomer having an iodine atom is copolymerized, it is easy to introduce an iodine atom also into a side chain of the copolymer A.

Specific examples of the monomer having an iodine atom are iodoethylene, 4-iodo-3,3,4,4-tetrafluoro-1-butene, 2-iodo-1,1,2,2-tetrafluoro-1-vinyloxyethane, 2-iodoethyl vinyl ether, allyl iodide, 1,1,2,3,3,3-hexafluoro-2-iodo-1 -(perfluorovinyloxy)propane, 3,3,4,5,5,5-hexafluoro-4-iodopentene, iodotrifluoroethylene, and 2-iodoperfluoro(ethyl vinyl ether).

When the copolymer A has units based on a monomer having an iodine atom, the content thereof is preferably from 0.001 to 2.0 mol%, more preferably from 0.01 to 1.0 mol%, particularly preferably from 0.01 to 0.5 mol%, to all units in the copolymer A.

It is preferred that the copolymer A has iodine atoms, and it is particularly preferred that it has iodine atoms at the terminals of the copolymer A (polymer chain). Here, the term "terminals" refers to both of the terminal of the main chain and the terminal of a branched chain, of the copolymer A.

Iodine atoms may be iodine atoms derived from iodine compounds that function as chain transfer agents as described later, and iodine atoms in units based on monomers having iodine atoms as described above, and they are preferably iodine atoms derived from iodine compounds.

When the copolymer A has iodine atoms, the content thereof is preferably from 0.01 to 5.0 mass%, more preferably from 0.05 to 2.0 mass%, particularly preferably from 0.05 to 1.0 mass%, to the total mass of the copolymer A. When the content of iodine atoms is within the above range, the crosslinking reactivity of the copolymer A will be superior, and the mechanical properties of rubber A will be superior.

When the copolymer A has iodine atoms, the mass ratio of the content of iodine atoms to the content of a crosslinking agent (as described later) in the composition A (content of iodine atoms/content of crosslinking agent) is preferably from 0.20 to 4.0, more preferably from 0.40 to 2.5, further preferably from 0.45 to 1.5, particularly preferably from 0.50 to 1.3. When it is at least the lower limit value in the above range, the crosslinking reaction tends to proceed easily, and when it is at most the upper limit value in the above range, the tensile strength will be superior.

When the copolymer A has iodine atoms, the mass ratio of the content of iodine atoms to the content of a crosslinking co-agent (as described later) in the composition A (content of iodine atoms/content of crosslinking co-agent) is preferably from 0.05 to 2.5, more preferably from 0.15 to 1.6, further preferably from 0.20 to 1.5, particularly preferably from 0.30 to 1.3. When it is at least the lower limit value in the above range, the crosslinking reaction tends to proceed easily, and when it is at most the upper limit value in the above range, the tensile strength will be superior.

The content of the copolymer A is preferably from 75 to 99 mass%, more preferably from 85 to 99 mass%, further preferably from 95 to 99 mass%, particularly preferably from 97 to 99 mass%, to the total mass of the composition A.

### (Method for producing copolymer A)

One example of the method for producing the copolymer A may be a method of copolymerizing the above-mentioned monomers in the presence of a chain transfer agent and a radical polymerization initiator.

The chain transfer agent is preferably an iodine compound, particularly preferably an iodine compound represented by the formula RI₂. In the above formula, R represents an alkylene group or perfluoroalkylene group having preferably at least 3, more preferably from 3 to 8 carbon atoms.

Specific examples of the iodine compound represented by the formula RI₂ may be 1,3-diiodopropane, 1,4-diiodobutane, 1,6-diiodohexane, 1,8-diiodooctane, 1,3-diiodo perfluoropropane, 1,4-diiodoperfluorobutane, 1,6-diiodoperfluorohexane and 1,8-diiodoperfluorooctane.

As the iodine compound, an iodine compound having a perfluoroalkylene group is preferred, and 1,4-diiodoperfluorobutane is particularly preferred.

When the above monomers are copolymerized in the presence of such an iodine compound, iodine atoms can be introduced into the main chain terminal of the copolymer A. Further, when copolymer A having a branched chain is obtainable in the present invention, iodine atoms can be introduced also to the terminal of this branched chain in the same way. Therefore, the polymer chain terminal having iodine atoms may be the main chain terminal or the branched chain terminal.

As the radical polymerization initiator, a water-soluble polymerization initiator or a redox polymerization initiator is preferred. Specific examples of the water-soluble polymerization initiator may be persulfates such as ammonium persulfate, sodium persulfate and potassium persulfate, and organic polymerization initiators such as disuccinic acid peroxide and azobisisobutylamidine dihydrochloride, and among them, persulfates are preferred, and ammonium persulfate is more preferred.

As the redox polymerization initiator, a polymerization initiator having a persulfate and a reducing agent combined, may be mentioned. Among them, a polymerization initiator capable of polymerizing each monomer at a polymerization temperature in a range of from 0 to 60°C is preferred. Specific examples of the persulfate to constitute the redox polymerization initiator may be alkali metal salts of persulfate such as ammonium persulfate, sodium persulfate, potassium persulfate, etc., and ammonium persulfate is preferred. Specific examples of the reducing agent to be combined with the persulfate may be a thiosulfate, a sulfite, a hydrogen sulfite, a pyrosulfite and a hydroxymethanesulfinate, and a hydroxymethanesulfinate is preferred, and sodium hydroxymethanesulfinate is particularly preferred.

With respect to details of the components other than the above to be used in the production of the copolymer A and the production method, reference may be made to the method described in paragraphs 0033 to 0053 of WO 2017/057512.

### <Crosslinking agent>

The crosslinking agent is used to crosslink the copolymer A. As the crosslinking agent, an organic peroxide is preferred, since the crosslinking reactivity of the copolymer A will thereby be excellent.

Specific examples of the organic peroxide may be dialkyl peroxides, α,α'-bis(tert-butylperoxy)-p-diisopropylbenzene, α,α'-bis(tert-butylperoxy)-m-diisopropylbenzene, benzoyl peroxide, tert-butylperoxybenzene, 2,5-dimethyl-2,5-di(benzoylperoxy)hexane, tert-butyl cumyl peroxide and dicumyl peroxide, and dialkyl peroxides, α,α'-bis(tert-butylperoxy)-p-diisopropylbenzene and α,α'-bis(tert-butylperoxy)-m-diisopropylbenzene are preferred.

Specific examples of the dialkyl peroxides may be 1,1-di(tert-butylperoxy)-3,3,5-trimethylcyclohexane, 2,5-dimethylhexane-2,5-dihydroxy peroxide, tert-butylperoxymaleate, tert-butylperoxyisopropyl carbonate, di-tert-butylperoxide, 2,5-dimethyl-2,5-di(tert-butylperoxy)hexane, and 2,5-dimethyl-2,5-di(tert-butylperoxy)-3-hexine, and as the dialkyl peroxides, dicumyl peroxide and 2,5-dimethyl-2,5-di(tert-butylperoxy)hexane are preferred.

As the crosslinking agent, only one type may be contained, or two or more types may be contained.

In the composition A, the content of the crosslinking agent is from 0.03 to 1.5 parts by mass, preferably from 0.03 to 0.7 parts by mass, more preferably from 0.1 to 0.6 parts by mass, particularly preferably from 0.3 to 0.5 parts by mass, to 100 parts by mass of the copolymer A. When it is at least the lower limit value in the above range, the tensile strength of rubber A will be superior, and when it is at most the upper limit value in the above range, the transparency of rubber A will be superior.

### <Crosslinking co-agent>

A crosslinking co-agent is used to improve the crosslinking reactivity of the copolymer A.

The crosslinking co-agent is preferably a compound having at least two reactive functional groups in the same molecule. Specific examples of the reactive functional groups may be carbon-carbon double bond-containing groups, halogen atoms, acid anhydride residues, carboxy groups, amino groups, cyano groups and hydroxy groups. The plurality of reactive functional groups present in the same molecule of the crosslinking co-agent may be the same or different from each other.

Specific examples of the carbon-carbon double bond-containing groups may be alkenyl groups such as vinyl, allyl and methallyl groups, unsaturated acyl groups such as acryloyl and methacryloyl groups, and maleimide groups. As the carbon-carbon double bond-containing groups, C₂₋₄ alkenyl groups are preferred, and allyl groups are particularly preferred.

Examples of the crosslinking co-agent may be triallyl cyanurate, triallyl isocyanurate, trimethallyl isocyanurate, 1,3,5-triacryloylhexahydro-1,3,5-triazine, triallyl trimellitate, m-phenylenediamine bismaleimide, p-quinonedioxime, p,p'-dibenzoylquinonedioxime, dipropargyl terephthalate, diallyl phthalate, N,N',N",N"'-tetraallyl terephthalamide, and vinyl group-containing siloxane oligomers (polymethylvinylsiloxane, polymethylphenylvinylsiloxane, etc.). Among them, triallyl cyanurate, triallyl isocyanurate and trimethallyl isocyanurate are preferred, and triallyl isocyanurate is particularly preferred.

As the crosslinking co-agent, only one type may be contained, or two or more types may be contained.

In the composition A, the content of the crosslinking co-agent is from 0.1 to 3.5 parts by mass, preferably from 0.1 to 2.5 parts by mass, more preferably from 0.1 to 2.0 parts by mass, particularly preferably from 0.15 to 1.5 parts by mass, to 100 parts by mass of the copolymer A. When it is at least the lower limit value in the above range, the tensile strength of rubber A will be superior, and when it is at most the upper limit value in the above range, the transparency of rubber A will be superior.

In the composition A, the mass ratio of the content of the crosslinking agent to the content of the crosslinking co-agent (content of the crosslinking agent/content of the crosslinking co-agent) is preferably from 0.01 to 8.5, more preferably from 0.4 to 7, further preferably from 0.4 to 7.0, still further preferably from 0.4 to 5.0, particularly preferably from 0.5 to 2.0. Within the above range, an unreacted crosslinking agent is unlikely to remain, and the crosslinking reaction proceeds well, whereby the transparency will be superior.

In the composition A, it is preferred that the total content of the crosslinking agent and the crosslinking co-agent is preferably at most 5.0 parts by mass, more preferably at most 2.0 parts by mass, further preferably at most 1.8 parts by mass, particularly preferably at most 1.5 parts by mass, to 100 parts by mass of the copolymer A. When it is at most the above value, the transparency of rubber A will be superior.

In the composition A, the total content of the crosslinking agent and the crosslinking co-agent is preferably at least 0.1 part by mass, particularly preferably at least 0.5 part by mass, to 100 parts by mass of the copolymer A. When it is at least the above value, the tensile strength of rubber A will be superior.

<Acid acceptor>

An acid acceptor is used to improve the crosslinking reactivity of the copolymer A.

The acid acceptor is preferably a monovalent or divalent metal oxide, a monovalent or divalent metal hydroxide, or a fatty acid metal salt.

Specific examples of the monovalent or divalent metal oxide may be zinc oxide, magnesium oxide, sodium oxide, calcium oxide, barium oxide, lead oxide and copper oxide.

Specific examples of the monovalent or divalent metal hydroxide may be magnesium hydroxide, aluminum hydroxide and calcium hydroxide.

Further, hydrotalcite may also be suitably used as an acid acceptor.

The fatty acid metal salt may be a fatty acid metal salt represented by the following formula (A4).

The acid acceptor is preferably at least one type selected from the group consisting of zinc oxide, magnesium oxide, and a fatty acid metal salt represented by the following formula (A4), from the viewpoint of being able to further improve the crosslinking reactivity.

(R^{A}COO⁻)ₙMⁿ⁺ (A4)

In the formula, R^{A} is a C₁₀₋₃₀ organic group, n is an integer of 2 or 3, and M is an alkaline earth metal, Zn, Cd, Co, Sn, Cu, Pb, Ni or Al.

The organic group represented by R^{A} may be saturated or unsaturated, and is preferably an aliphatic hydrocarbon group, more preferably a linear aliphatic hydrocarbon group, particularly preferably a saturated linear aliphatic hydrocarbon group. The number of carbon atoms of the organic group represented by R^{A} is from 10 to 30, preferably from 10 to 25, more preferably from 10 to 20, particularly preferably from 12 to 18.

As M, an alkaline earth metal, Zn, Pb or Al is preferred, Mg, Ba, Ca, Zn or Al is more preferred, Ca or Al is further preferred, and Ca is particularly preferred.

The metal salt represented by the formula (A4) is a metal salt of a higher fatty acid, generally known as a processing aid. The fatty acid may be a naturally occurring component such as an animal fatty acid or an artificial synthetic component. It may also be a mixture of two or more types of fatty acids different in number of carbon atoms.

Specific examples of the metal salt represented by the formula (A4) may be calcium stearate, zinc stearate, barium stearate, magnesium stearate, aluminum stearate, cadmium stearate, cobalt stearate, tin stearate, lead stearate, copper stearate, nickel stearate, lithium stearate, calcium ricinoleate, zinc palmitate and aluminum myristate.

Among them, as the metal salt represented by the formula (A4), calcium stearate, zinc stearate, barium stearate, magnesium stearate, and aluminum stearate are preferred, calcium stearate and aluminum stearate are more preferred, and calcium stearate is particularly preferred.

As the acid acceptor, only one type may be contained, or two or more types may be contained.

In the composition A, the content of the acid acceptor is preferably from 0.01 to 1.5 parts by mass, more preferably from 0.03 to 1.0 part by mass, particularly preferably from 0.05 to 0.6 part by mass, to 100 parts by mass of the copolymer A. When it is at least the lower limit value in the above range, the tensile strength of rubber A will be superior, and when it is at most the upper limit value in the above range, the transparency of rubber A will be superior.

### <Other components>

The composition A may contain other components other than those mentioned above to such an extent that the effects of the invention are not impaired. Specific examples of such other components may be processing aids (e.g. fatty acid esters), fillers and reinforcing agents (e.g. carbon black, barium sulfate, calcium metasilicate, calcium carbonate, titanium dioxide, silicon dioxide, clay, talc), vulcanizing agents, and scorch retardants (e.g. phenolic hydroxy group-containing compounds such as ortho-phenylphenol, bisphenol A, etc., quinones such as hydroquinone, α-methylstyrene dimers such as 2,4-di(3-isopropylphenyl)-4-methyl-1-pentene, etc.).

Although the composition A may contain the above-described other components, it is preferred that the composition A does not substantially contain such other components from the viewpoint of superior transparency of rubber A. Here, "the composition A does not substantially contain such other components" means that in the composition A, the total content of other components is at most 0.1 part by mass, preferably at most 0.01 part by mass, particularly preferably 0 part by mass, to 100 parts by mass of the copolymer A. When the composition A does not substantially contain other components, it becomes easier to bring the total light transmittance of rubber A to be in the range of from 60 to 100%.

However, in a case where the refractive index of the crosslinked rubber a obtainable by crosslinking the composition a consisting solely of the above fluorinated copolymer, the above crosslinking agent, the above crosslinking co-agent, and the above acid acceptor, is equivalent to the refractive index of other components, the content of such other components may be outside the above range. This is because when the refractive index of the crosslinked rubber a and the refractive index of other components are equivalent, the total light transmittance of the rubber A is unlikely to decrease, and it is presumed that there is little effect on the transparency of the rubber A.

In a case where the refractive index of the crosslinked rubber a and the refractive index of other components are equivalent, the total content of other components in the composition A is preferably at most 20 parts by mass, more preferably at most 15 parts by mass, further preferably at most 10 parts by mass, particularly preferably at most 5 parts by mass, to 100 parts by mass of the copolymer A.

In the composition A, the total content of components other than the copolymer A, i.e. the crosslinking agent, the crosslinking co-agent, the acid acceptor and other components, is preferably from 0.5 to 20 parts by mass, more preferably from 0.5 to 10 parts by mass, further preferably from 0.5 to 1.8 parts by mass, particularly preferably from 0.5 to 1.5 parts by mass, to 100 parts by mass of the copolymer A. When it is at least the lower limit value in the above range, the tensile strength of rubber A will be superior, and when it is at most the upper limit value in the above range, the transparency of rubber A will be superior.

As the method for preparing the composition A, a method of mixing the above-mentioned respective components may be mentioned. The mixing of the respective components may be carried out by using a mixing device for rubber, such as a roll, kneader, Banbury mixer or extruder.

Further, after obtaining a mixture having the above respective components mixed, the mixture may be molded. That is, the composition A may be a molded product. A specific example of the molding method of the mixture may be compression molding, injection molding, extrusion molding, calendar molding, or a method of molding by dipping or coating as dissolved in a solvent.

### [Method for producing rubber A]

Rubber A is obtainable by crosslinking the copolymer A in the composition A.

As the method for crosslinking the copolymer A in the composition A, a method of heating the composition A is preferred.

As a specific example of the method of heating, heat press crosslinking, steam crosslinking, or hot air crosslinking may be mentioned, and may be suitably selected for use in consideration of the form and application of the composition A.

The heating conditions are preferably at from 100 to 400°C for from 1 second to 24 hours.

The rubber that has been primarily crosslinked by heating the composition A may be further heated and secondarily crosslinked. By conducting the secondary crosslinking, it is possible to stabilize or improve the mechanical properties, compression set and other properties of the rubber.

Heating conditions at the time of conducting the secondary crosslinking are preferably from 100 to 300°C for from 30 minutes to 48 hours.

A crosslinking method other than heating the copolymer A in the composition A may be a method of crosslinking by irradiating the composition A with radiation. Specific examples of the radiation to be irradiated may be electron beams and ultraviolet rays.

### <Physical properties>

Rubber A exhibits high transparency, since it is obtained from the composition A. As an index for showing the transparency of rubber A, the total light transmittance may be mentioned. The total light transmittance (%) means the transmittance of the light rays including all of the parallel and diffuse components among the light rays transmitted when the test piece is exposed to light.

The total light transmittance of rubber A is from 60% to 100%, and from such a viewpoint that the transparency of rubber A will be superior, preferably at least 70%, more preferably at least 73%, particularly preferably at least 75%, and from such a viewpoint that the tensile strength of rubber A will be superior, preferably at most 99%, more preferably at most 95%, particularly preferably at most 93%. Rubber A satisfies the above total light transmittance, since it is obtained by using the composition A. When the total light transmittance is at least 60%, the transparency can be said to be excellent when rubber A is observed.

The total light transmittance of rubber A in the present invention is a value to be measured in accordance with JIS K7361-1:1997 by using a plate-shaped molded product of rubber A (thickness: 2 mm).

As an index showing the transparency of rubber A, the parallel light transmittance may be mentioned. The parallel light transmittance (%) means the transmittance of the parallel component, excluding the diffuse component, among the light rays transmitted when a test piece is exposed to light. The higher the parallel light transmittance, the better the transparency of rubber A.

The parallel light transmittance of rubber A is preferably from 5 to 100%, and from such a viewpoint that the transparency of rubber A will be superior, it is preferably at least 30%, more preferably at least 40%, particularly preferably at least 45%, and from such a viewpoint that the tensile strength of rubber A will be superior, it is preferably at most 99%, more preferably at most 95%, particularly preferably at most 90%.

The parallel light transmittance of rubber A in the present invention is a value measured in accordance with JIS K7361-1:1997 by using a plate-shaped molded product of rubber A (thickness: 2 mm).

As an index showing the transparency of rubber A, the haze value may be mentioned. The haze value (%) means the ratio (100 x Td/Tt [%]) of the transmittance of the diffuse light excluding the parallel component (diffuse transmittance Td) to the transmittance of the light rays including all of the parallel and diffuse components (total light transmittance Tt), among the light rays transmitted by exposing a test piece to light. The haze value indicates the turbidity (cloudiness) of the object to be measured. The smaller the haze value, the smaller the turbidity, and the better the transparency of rubber A.

The haze value of rubber A is preferably from 0 to 90%. From such a viewpoint that the transparency of rubber A will be superior, it is more preferably at most 65%, further preferably at most 50%, particularly preferably at most 41%, and from the point of superior tensile strength of rubber A, it is more preferably at least 0.5%, further preferably at least 0.7%, particularly preferably at least 1%. When the haze value is at most 90%, the transparency at the time when rubber A is observed, will be superior.

The haze value of rubber A in the present invention is a value measured in accordance with JIS K7136:2000 by using a plate-shaped molded product of rubber A (thickness: 2 mm).

As an index for the crosslinking properties of rubber A, M_{H}-M_{L} (hereinafter referred to also as "degree of crosslinking") to be measured by the method in Examples as described later, may be mentioned. The higher the numerical value of the degree of crosslinking, the more the crosslinked structure of rubber A, and the more microcrystalline portions exist in rubber A. Therefore, when the numerical value of the degree of crosslinking is small, it can be said that the transparency of rubber A is excellent, and when the numerical value of the degree of crosslinking is large, it can be said that the rubber properties of rubber A are excellent (for example, the tensile strength is high).

The degree of crosslinking of rubber A is preferably from 3 to 70 dNm, more preferably from 3 to 50 dNm, further preferably from 3 to 45 dNm, particularly preferably from 5 to 40 dNm. When the degree of crosslinking of rubber A is within the above range, both rubber properties and transparency can be achieved at a high level.

Rubber with more crosslinked structures has a higher hardness, and therefore, the hardness also becomes to be an index for the crosslinking properties of rubber A.

The hardness (Shore-A) of rubber A is preferably from 40 to 70, more preferably from 40 to 64, particularly preferably from 45 to 60. When the hardness is at least the lower limit value in the above range, the performance as a sealing material will be sufficiently demonstrated. When it is at most the upper limit value in the above range, the microcrystalline portions present in rubber A will be sufficiently small, and the transparency will be excellent.

The hardness of rubber A (Shore-A) is a value to be measured by using a type A durometer in accordance with JIS K6253-3:2012, by using a plate-shaped molded product of rubber A (thickness: 2 mm).

The tensile strength of rubber A is preferably from 1 to 25 MPa, particularly preferably from 1 to 15 MPa. When the tensile strength of rubber A is within the above range, the rubber properties and transparency of rubber A will be superior.

The 100% modulus of rubber A is preferably from 0.2 to 5.0 MPa, particularly preferably from 0.5 to 2.0 MPa, from the viewpoint of excellent rubber properties.

The elongation at break of rubber A is preferably from 250 to 1,000%, particularly preferably from 350 to 1,000%, from the viewpoint of excellent rubber properties.

The tensile strength, the 100% modulus, and the elongation at break, of rubber A, are values to be measured in accordance with JIS K6251:2017 by using a sample having a plate-shaped molded product of rubber A (thickness: 2 mm) punched out by a No. 3 dumbbell.

### <Applications>

Rubber A is suitable as a material for e.g. O-rings, sheets, gaskets, oil seals, diaphragms and V-rings. Further, it is also useful for applications, such as heat-resistant chemical-resistant sealing materials, heat-resistant oil-resistant sealing materials, electric wire coating materials, sealing materials for semiconductor equipment, corrosion-resistant rubber paints, sealing materials for urea-resistant grease, etc., rubber paints, adhesive rubber, hoses, tubes, calendar sheets (rolls), sponges, rubber rolls, members for oil drilling, heat dissipating sheets, solution crosslinkers, rubber sponges, bearing seals (urea resistant grease, etc.), lining (chemical resistant), automotive insulating sheets, insulating sheets for electronic equipment, rubber bands for watches, packings for endoscope (amine resistant), bellows hoses (processed from calendar sheets), packings/valves for water heaters, fenders (marine civil engineering, ships), fibers and non-woven fabrics (protective clothing, etc.), sealing materials for substrate, rubber gloves, stators for uniaxial eccentric screw pumps, parts for urea SCR systems, vibration isolators, damping agents, sealants, additives to other materials, and toys.

Rubber A is excellent in transparency and thus is particularly suitable for applications where visibility from the outside is required. A specific example of the application where transparency is required, may be a material for forming channels of microfluidic devices in biomimetic chips.

### [Second embodiment]

The crosslinked rubber in the second embodiment of the present invention is crosslinked rubber (hereinafter referred to also as "rubber B") obtainable by crosslinking a fluorinated copolymer (hereinafter also referred to as "copolymer B") in a composition (hereinafter referred to as "composition B") comprising the copolymer B, a crosslinking agent and a crosslinking co-agent, wherein the above copolymer B is a copolymer having tetrafluoroethylene units and perfluoro(alkyl vinyl ether) units; in the above composition B, the content of the above crosslinking agent is from 0.03 to 0.7 parts by mass to 100 parts by mass of the above copolymer B; in the above composition B, the content of the above crosslinking co-agent is from 0.1 to 2.5 parts by mass to 100 parts by mass of the above copolymer B; and the total light transmittance of the above rubber B is from 70 to 100%.

The crosslinked rubber obtained by the method for producing crosslinked rubber of the second embodiment, is excellent in tensile strength and transparency. The reason for this is the same as in the first embodiment.

The components to be used in the production of rubber B, the method for producing rubber B, and the physical properties of rubber B, etc. are the same as those of rubber A as described in the first embodiment, unless otherwise noted, and therefore, their description will be omitted.

In the following, description will be made mainly with respect to points which are different from the rubber A as described in the first embodiment.

### [Composition B]

Composition B comprises copolymer B, a crosslinking agent, and a crosslinking co-agent. Composition B differs from composition A in the first embodiment at least in that copolymer B is used instead of copolymer A, and that it is not required to contain an acid acceptor.

### <Copolymer B>

The copolymer B differs from the copolymer A in the first embodiment in that it indispensably has TFE units and PAVE units. Specific examples of the PAVE units are as described for the copolymer A in the first embodiment.

The copolymer B preferably does not contain P units.

The copolymer B may have units based on monomers other than TFE and PAVE, and the above-mentioned formula (A1) units and the above-mentioned formula (A2) units are preferred.

The lower limit value of the content of TFE units is preferably at least 40 mol%, more preferably at least 50 mol%, particularly preferably at least 60 mol%, to all units of the copolymer B. The upper limit value of the content of TFE units is preferably at most 90 mol%, more preferably at most 80 mol%, further preferably at most 69 mol%, particularly preferably at most 68 mol%, to all units of the copolymer B. The content of PAVE units is preferably from 10 to 60 mol%, more preferably from 20 to 50 mol%, further preferably from 31 to 50 mol%, particularly preferably from 32 to 50 mol%, most preferably from 32 to 40 mol%, to all units of the copolymer B.

In a case where the copolymer B has formula (A1) units, the content thereof is preferably from 0.03 to 0.5 mol%, particularly preferably from 0.05 to 0.3 mol%, to all units of the copolymer B.

In a case where the copolymer B has formula (A2) units, the content thereof is preferably from 5 to 50 mol%, particularly preferably from 10 to 30 mol%, to all units of the copolymer B.

The total of the content of TFE units and the content of PAVE units, is preferably from 50 to 100 mol%, more preferably from 80 to 100 mol%, to all units of the copolymer B.

Suitable combinations of the respective units to be contained in the copolymer B are shown below.
Combination 6: Combination of TFE units and PAVE units (preferably formula (A3) units, particularly preferably PPVE units or PMVE units)
Combination 7: Combination of TFE units, PAVE units (preferably formula (A3) units, particularly preferably PPVE units or PMVE units) and formula (A1) units

The copolymerization compositions in combinations 6 and 7 are preferably in the following molar ratios. When they are the following molar ratios, the crosslinking reactivity of the copolymer will be even more excellent, and furthermore, the mechanical properties, heat resistance, chemical resistance, oil resistance and weather resistance of rubber B will be excellent.
Combination 6: TFE units/PAVE units = 40 to 90/10 to 60 (molar ratio)
Combination 7: TFE units/PAVE units/formula (A1) units = 40 to 90/10 to 60/0.03 to 0.5 (molar ratio)

The copolymerization compositions in combinations 6 and 7 are more preferably in the following molar ratios.
Combination 6: TFE units/PAVE units = 69 to 90/10 to 31 (molar ratio)
Combination 7: TFE units/PAVE units/formula (A1) units = 40 to 89.5/10 to 59.5/0.03 to 0.5 (molar ratio)

It is preferred that the copolymer B has iodine atoms, and it is particularly preferred that it has iodine atoms at the terminals of the copolymer B (polymer chain).

The iodine atoms may be iodine atoms derived from an iodine compound which functions as a chain transfer agent, or iodine atoms in units based on a monomer having an iodine atom, and iodine atoms derived from an iodine compound are preferred. Further, specific examples of the iodine compound and the monomer having an iodine atom are as described in the first embodiment.

In a case where the copolymer B has iodine atoms, the content of the iodine atoms is preferably from 0.01 to 5.0 mass%, more preferably from 0.05 to 2.0 mass%, particularly preferably from 0.05 to 1.0 mass%, to the total mass of the copolymer B. When the content of iodine atoms is within the above range, the crosslinking reactivity of the copolymer B will be superior, and the mechanical properties of rubber B will be superior.

In a case where the copolymer B has iodine atoms, the mass ratio (content of iodine atoms/content of crosslinking agent) of the content of the iodine atoms to the content of the crosslinking agent (described below) in the composition B, is preferably from 0.3 to 1.2, more preferably from 0.3 to 1.0, particularly preferably from 0.35 to 0.70. When it is at least the lower limit value in the above range, the crosslinking reaction tends to proceed easily, and when it is at most the upper limit value in the above range, the tensile strength will be superior.

In a case where the copolymer B has iodine atoms, the mass ratio (content of iodine atoms/content of crosslinking co-agent) of the content of iodine atoms to the content of the crosslinking co-agent (described below) in the composition B, is preferably from 0.3 to 1.2, more preferably from 0.3 to 1.0, particularly preferably from 0.35 to 0.70. When it is at least the lower limit value in the above range, the crosslinking reaction tends to proceed easily, and when it is at most the upper limit value in the above range, the tensile strength will be superior.

The content of the copolymer B is preferably from 75 to 99 mass%, more preferably from 85 to 99 mass%, further preferably from 96 to 99 mass%, particularly preferably from 97 to 99 mass%, to the total mass of the composition B.

### (Method for producing copolymer B)

One example of the method for producing the copolymer B may be a method of copolymerizing the above-mentioned monomers in the presence of a chain transfer agent and a radical polymerization initiator.

Specific examples of the chain transfer agent and the radical polymerization initiator to be used in the production of the copolymer B are the same as the chain transfer agent and the radical polymerization initiator in the first embodiment.

With respect to details of components other than the above to be used in the production of the copolymer B and the production method, the method described in paragraphs 0019 to 0034 of WO 2010/082633 may be referred to.

### <Crosslinking agent>

Specific examples of the crosslinking agent in the composition B are the same as those of the crosslinking agent in the first embodiment.

In the composition B, the content of the crosslinking agent is from 0.03 to 0.7 part by mass, preferably from 0.1 to 0.6 part by mass, particularly preferably from 0.1 to 0.5 part by mass, to 100 parts by mass of the copolymer B. When it is at least the lower limit value in the above range, the tensile strength of rubber B will be superior, and when it is at most the upper limit value in the above range, the transparency of rubber B will be superior.

### <Crosslinking co-agent>

Specific examples of the crosslinking co-agent in the composition B are the same as of the crosslinking co-agent in the first embodiment.

In the composition B, the content of the crosslinking co-agent is from 0.1 to 2.5 parts by mass, preferably from 0.1 to 2.0 parts by mass, particularly preferably from 0.1 to 1.0 part by mass, to 100 parts by mass of the copolymer B. When it is at least the lower limit value in the above range, the tensile strength of rubber B will be superior, and when it is at most the upper limit value in the above range, the transparency of the rubber will be superior.

In the composition B, the mass ratio (content of crosslinking agent/content of crosslinking co-agent) of the content of the crosslinking agent to the content of the crosslinking co-agent, is preferably from 0.4 to 7, more preferably from 0.4 to 7.0, further preferably from 0.4 to 5.0, particularly preferably from 0.5 to 2.0. When it is within the above range, an unreacted crosslinking agent is unlikely to remain, and the crosslinking reaction proceeds well, whereby the transparency will be superior.

In the composition B, the total of the contents of the crosslinking agent and the crosslinking co-agent is preferably at most 2.0 parts by mass, more preferably at most 1.8 parts by mass, particularly preferably at most 1.5 parts by mass, to 100 parts by mass of the copolymer B. When it is at most the above value, the transparency of rubber B will be superior.

In the composition B, the total of the contents of the crosslinking agent and the crosslinking co-agent is preferably at least 0.10 part by mass, particularly preferably at least 0.15 part by mass, to 100 parts by mass of the copolymer B. When it is at least the above value, the tensile strength of rubber B will be superior.

### <Other components>

The composition B may contain the above-mentioned acid acceptor, or the above-mentioned other components, to such an extent that the effects of the present invention are not impaired. Such other components are the same as the components which may be contained in the composition A.

The composition B may contain the above-mentioned acid acceptor and other components, but it is preferred that the composition B does not substantially contain the acid acceptor and other components from such a viewpoint that the transparency of rubber B will be superior. Here, "the composition B does not substantially contain the acid acceptor and other components" means that the total of the contents of the acid acceptor and other components in the composition B is at most 0.1 part by mass, preferably at most 0.01 part by mass, particularly preferably 0 part by mass, to 100 parts by mass of the copolymer B. When the composition B does not substantially contain the acid acceptor and other components, it becomes easier to adjust the total light transmittance of rubber B to be in the range of from 70 to 100%.

However, in a case where the refractive index of the crosslinked rubber b obtainable by crosslinking the composition b consisting solely of the above fluorinated copolymer, the above crosslinking agent and the above crosslinking co-agent, is equivalent to the refractive index of the acid acceptor and other components, the contents of the acid acceptor and other components may be outside the above ranges. This is because in the case where the refractive index of the crosslinked rubber b and the refractive index of the acid acceptor and other components are equivalent, the total light transmittance of rubber B is unlikely to decrease, and the effect on the transparency of the rubber B is presumed to be small.

In a case where the refractive index of the crosslinked rubber b and the refractive index of the acid acceptor and other components are equivalent, the total of the contents of the acid acceptor and other components in the composition B is preferably at most 20 parts by mass, more preferably at most 15 parts by mass, further preferably at most 10 parts by mass, particularly preferably at most 5 parts by mass, to 100 parts by mass of the copolymer B.

In the composition B, the total of the contents of components other than the copolymer B, i.e. the crosslinking agent, the crosslinking co-agent, the acid acceptor and other components, is preferably from 0.5 to 20 parts by mass, more preferably from 0.5 to 10 parts by mass, further preferably from 0.5 to 1.8 parts by mass, particularly preferably from 0.5 to 1.2 parts by mass, to 100 parts by mass of the copolymer B. When it is at least the lower limit value in the above range, the tensile strength of rubber B will be superior, and when it is at most the upper limit value in the above range, the transparency of rubber B will be superior.

The method for preparing the composition B is the same as the method for preparing the composition A in the first embodiment.

Further, after obtaining a mixture having the above respective components mixed, the mixture may be molded. That is, the composition B may be a molded product. Specific examples of the molding method are as described in the first embodiment.

### [Method for producing rubber B]

Rubber B is obtainable by crosslinking the copolymer B in the composition B. The crosslinking method and crosslinking conditions for the copolymer B in the composition B are the same as the crosslinking method and crosslinking conditions for the copolymer A in the composition A in the first embodiment.

### <Physical properties>

With respect to the physical properties of rubber B as shown below, the definitions of the total light transmittance, the parallel light transmittance, the haze value and the degree of crosslinking, and the measurement methods for the total light transmittance, the parallel light transmittance, the haze value, the degree of crosslinking, the hardness, the tensile strength, the 100% modulus and the elongation at break, are the same as the definitions and measurement methods as described in the section for the physical properties of rubber A in the first embodiment.

Rubber B is obtained by using the composition B and thus exhibits a high transparency. As an index showing the transparency of rubber B, the total light transmittance may be mentioned.

The total light transmittance of rubber B is from 70 to 100%; from the viewpoint of superior transparency of rubber B, more preferably at least 73%, particularly preferably at least 75%; and from the viewpoint of superior tensile strength of rubber B, preferably at most 99%, more preferably at most 95%, particularly preferably at most 93%. Rubber B is obtained by using the composition B and thus, satisfies the above total light transmittance.

Here, when the total light transmittance is at least 60%, the transparency at the time when the crosslinked rubber is observed, is excellent, but since the total light transmittance of rubber B is at least 70%, the transparency when rubber B is observed, may be said to be even better.

The parallel light transmittance of rubber B is preferably from 20 to 100%; from the viewpoint of superior transparency of rubber B, more preferably at least 40%, further preferably at least 50%, particularly preferably at least 55%; and from the viewpoint of superior tensile strength of rubber B, more preferably at most 99%, further preferably at most 95%, particularly preferably at most 90%. When the parallel light transmittance is at least 20%, the transparency at the time when rubber B is observed, will be superior.

The haze value of rubber B is preferably from 0 to 75%; from the viewpoint of superior transparency of rubber B, preferably at most 63%, more preferably at most 50%, particularly preferably at most 30%; and from the viewpoint of superior tensile strength of rubber B, more preferably at least 0.5%, further preferably at least 0.7%, particularly preferably at least 1%. When the haze value is at most 75%, the transparency when rubber B is observed, will be superior.

The degree of crosslinking of rubber B is preferably from 5 to 70 dNm, more preferably from 10 to 60 dNm, further preferably from 20 to 55 dNm, particularly preferably from 40 to 50 dNm. When the degree of crosslinking of rubber B is in the above range, both rubber properties and transparency can be achieved at a high level.

The hardness (Shore-A) of rubber B is preferably from 40 to 70, more preferably from 45 to 64, particularly preferably from 50 to 60. When the hardness is at least the lower limit value in the above range, the performance as a sealing material will be sufficiently demonstrated. When it is at most the upper limit value in the above range, the number of microcrystalline portions in rubber B will be sufficiently small, and the transparency will be excellent.

The tensile strength of rubber B is preferably from 1 to 21 MPa, particularly preferably from 5 to 15 MPa. When the tensile strength of rubber B is within the above range, the rubber properties and transparency of rubber A will be superior.

The 100% modulus of rubber B is preferably from 0.2 to 5.0 MPa, particularly preferably from 0.5 to 2.0 MPa, from such a viewpoint that the rubber properties will thereby be excellent.

The elongation at break of rubber B is preferably from 100 to 300%, particularly preferably from 200 to 250%, from such a viewpoint that the rubber properties will be excellent.

### <Applications>

The applications of rubber B are the same as the applications of rubber A in the first embodiment.

### EXAMPLES

Hereinafter, the present invention will be described in detail with reference to Examples. Ex. 1-1 to 1-14 and Ex. 2-1 to 2-3 are Examples of the present invention, and Ex. 1-15 to 1-18 and Ex. 2-4 to 2-9 are Comparative Examples. However, the present invention is not limited to these Examples. The amounts of the respective components in Tables given later are based on mass.

### [Measurement of copolymerization composition]

The contents of the respective units in a copolymer were calculated by the nuclear magnetic resonance (NMR) analysis.

Further, the content of iodine atoms in a copolymer was calculated by using a device having an automatic sample combustion system pretreatment system for ion chromatography (manufactured by Mitsubishi Chemical Analytech, AQF-100 model) and an ion chromatograph combined.

### [Total light transmittance, parallel light transmittance]

The total light transmittance and parallel light transmittance were measured by using a haze meter (manufactured by Nippon Denshoku Industries Co., Ltd., NDH5000) in accordance with JIS K7361-1:1997 by using a plate-shaped molded product of crosslinked rubber (thickness: 2 mm).

If the total light transmittance is at least 60%, the crosslinked rubber can be said to be excellent in transparency.

If the total light transmittance is at least 70%, the crosslinked rubber can be said to be superior in transparency.

### [Haze value]

The haze value was measured in accordance with JIS K7136:2000 by using a plate-shaped molded product of crosslinked rubber (thickness: 2 mm).

### [Degree of crosslinking]

The components and amounts shown in Tables given later were formulated and kneaded by two rolls for 10 minutes at room temperature to obtain a mixed composition.

With respect to the obtained composition, the crosslinking properties were measured by using a crosslinking property measuring instrument (manufactured by ALPHA Technologies, Ltd., product name "RPA2000") under conditions of at 160°C for 12 minutes with an amplitude of 3 degrees.

The measured M_{H} indicates the maximum torque value, M_{L} indicates the minimum torque value, and M_{H}-M_{L} (M_{H} minus M_{L}) indicates the degree of crosslinking (unit: dNm).

### [Tensile strength, 100% modulus, elongation at break, hardness]

The composition obtained in the same way as the measurement of the degree of crosslinking was heat-pressed (primary crosslinking) under the crosslinking conditions shown in Tables given later to obtain a crosslinked rubber sheet having a thickness of 2 mm. The obtained crosslinked rubber sheet was punched out by a No. 3 dumbbell to prepare measurement samples.

Using the obtained measurement samples, the tensile strength, the 100% modulus and the elongation at break were measured in accordance with JIS K6251:2017. Further, by using the obtained measurement samples, the hardness (Shore-A) was also measured by using a type A durometer in accordance with JIS K6253-3:2012.

The tensile strength, the 100% modulus and the elongation at break were measured by using a tensile tester with data processing (Quick Reader) TS-2530 (manufactured by Ueshima Seisakusho Co., Ltd.), and the hardness was measured by using Digitest Shore-A (manufactured by H. Bareiss).

If the tensile strength is at least 1 MPa, the crosslinked rubber can be said to be excellent in tensile strength.

### [Production of copolymer A1]

Copolymer A1 was produced by referring to the method of Example 5 in WO 2017/057512.

The copolymerization composition of copolymer A1 was TFE units/P units/C3DVE units = 56/43.8/0.2 (molar ratio). The content of iodine atoms in copolymer A1 was 0.37 mass%.

### [Production of copolymer A2]

Copolymer A2 was produced by referring to the method of Example 1 in WO 2009/119202.

The copolymerization composition of copolymer A2 was TFE units/P units = 56/44 (molar ratio). The content of iodine atoms in copolymer A2 was 0.26 mass%.

### [Production of copolymer B1]

Copolymer B1 was produced by referring to the method of Comparative Example 1 in WO 2010/082633.

The copolymerization composition of copolymer B1 was TFE units/PMVE units = 66/34 (molar ratio). The content of iodine atoms in copolymer B1 was 0.20 mass%.

### [Production of copolymer B2]

Copolymer B2 was produced by referring to the method of Example 1 in WO 2010/082633, except that PBDVE was changed to C3DVE.

The copolymerization composition of copolymer B2 was TFE units/PMVE units/C3DVE units = 65.9:34.0:0.1 (molar ratio). The content of iodine atoms in copolymer B2 was 0.20 mass%.

### [Ex. 1-1 to Ex. 1-18 and Ex. 2-1 to Ex. 2-9]

The components and blending amounts were formulated as shown in Tables, and kneaded by two rolls for 10 minutes under room temperature to obtain mixed compositions. The obtained compositions were heat-pressed (primary crosslinking) under the crosslinking conditions shown in Tables given later to obtain crosslinked rubbers (crosslinked rubber sheets) of Ex. 1-1 to 1-14 and Ex. 2-1 to 2-9 in sheet form. With respect to the compositions of Ex. 1-15 to 1-18, the compositions were not crosslinked and no crosslinked rubbers were obtained.

Using the obtained compositions and crosslinked rubbers, the above-mentioned various properties were measured. The measurement results are shown in Tables.

A summary of each of the components listed in Tables, excluding the copolymers, is given below.
R8200: Trade name "AEROSIL (registered trademark) R8200", manufactured by Aerosil Japan, reinforcing agent
Perkadox 14: Trade name, manufactured by Kayaku Akzo Corporation, α,α'-bis(tert-butylperoxy)-p-diisopropylbenzene, crosslinking agent (organic peroxide)
Perhexa 25B: Trade name, manufactured by Nippon Oil & Fat, 2,5-dimethyl-2,5-bis(tert-butylperoxy)hexane, crosslinking agent (organic peroxide)
TAIC: Trade name, manufactured by Mitsubishi Chemical Corporation, triallyl isocyanate, crosslinking co-agent
Ca stearate: Calcium stearate, acid acceptor

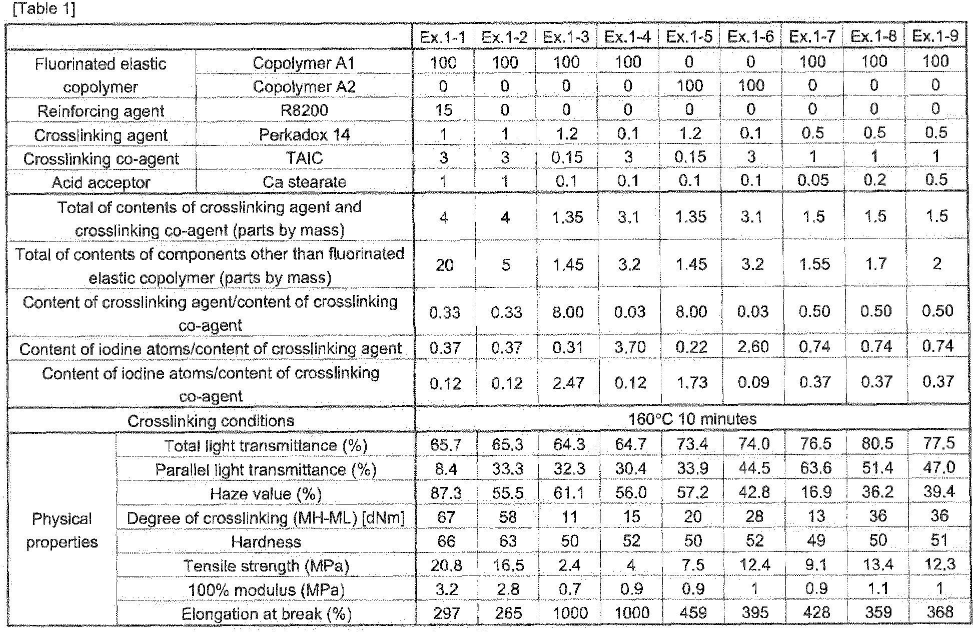

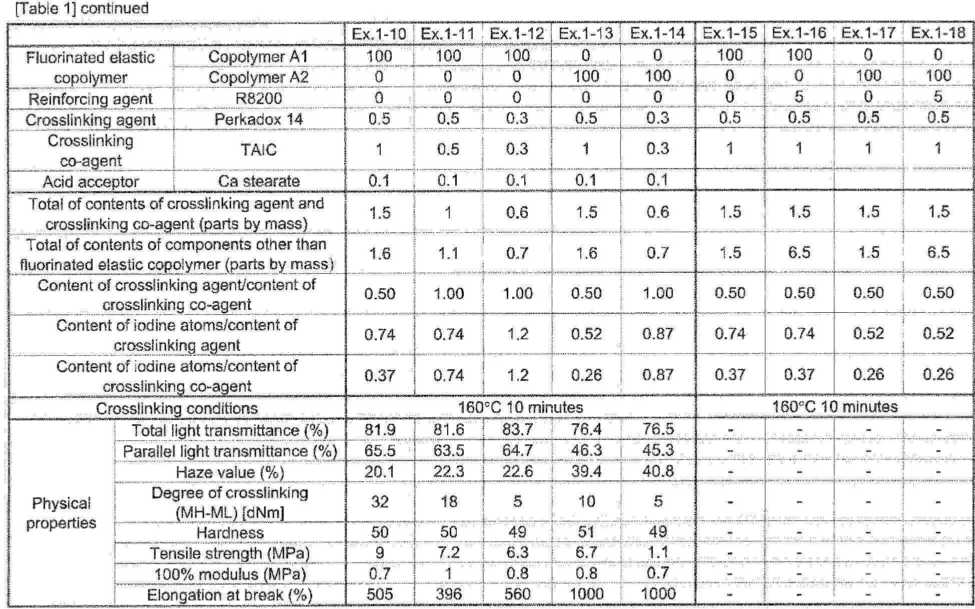

**[Table 2]**

| | | | Ex.2-1 | Ex.-2 | Ex.2-3 | Ex.2-4 | Ex.2-5 | Ex.2-6 | Ex.2-7 | Ex.2-8 | Ex.2-9 |
|---|---|---|---|---|---|---|---|---|---|---|---|
| Fluorinated elastic copolymer | | Copolymer B1 | 100 | 0 | 0 | 100 | 0 | 100 | 100 | 0 | 0 |
| | | Copolymer B2 | 0 | 100 | 100 | 0 | 100 | 0 | 0 | 100 | 100 |
| Reinforcing agent | | R8200 | 0 | 0 | 0 | 15 | 15 | 0 | 0 | 0 | 0 |
| Crosslinking agent | | Perkadox 14 | 0 | 0 | 0 | 1 | 1 | 1.2 | 0.15 | 1.2 | 0.15 |
| | | Perhexa 25B | 0.3 | 0.5 | 0.3 | 0 | 0 | 0 | 0 | 0 | 0 |
| Crosslinking co-agent | | TAIC | 0.3 | 0.5 | 0.3 | 3 | 3 | 0.15 | 3 | 0.15 | 3 |
| Acid acceptor | | Ca stearate | 0 | 0 | 0 | 1 | 1 | 0 | 0 | 0 | 0 |
| Total of contents of crosslinking agent and crosslinking co-agent (parts by mass) | | | 0.6 | 1 | 0.6 | 4 | 4 | 1.35 | 3.15 | 1.35 | 3.15 |
| Total of contents of components other than fluorinated elastic copolymer (parts by mass) | | | 0.6 | 1 | 0.6 | 20 | 20 | 1.35 | 3.15 | 1.35 | 3.15 |
| Content of crosslinking agent/content of crosslinking co-agent | | | 1.00 | 1.00 | 1.00 | 0.33 | 0.33 | 8.00 | 0.05 | 8.00 | 0.05 |
| Content of iodine atoms/content of crosslinking agent | | | 0.67 | 0.40 | 0.67 | 0.20 | 0.20 | 0.17 | 1.33 | 0.17 | 1.33 |
| Content of iodine atoms/content of crosslinking co-agent | | | 0.67 | 0.40 | 0.67 | 0.07 | 0.07 | 1.33 | 0.07 | 1.33 | 0.07 |
| Crosslinking conditions | | | 150°C 20 minutes | | | 150°C 20 minutes | | | | | |
| Physical properties | Total light transmittance (%) | | 92.0 | 79.5 | 89.0 | 67.3 | 68.1 | 13.3 | 9.5 | 12.5 | 9.0 |
| | Parallel light transmittance (%) | | 84.0 | 59.4 | 76.8 | 8.6 | 8.8 | 0.1 | 0.1 | 0.1 | 0 |
| | Haze value (%) | | 8.6 | 25.4 | 13.7 | 87.2 | 88.0 | 99.4 | 99.5 | 99.4 | 99.5 |
| | Degree of crosslinking (MH-ML) [dNm] | | 45 | 47 | 44 | 110 | 120 | 6 | 89 | 17 | 83 |
| | Hardness | | 57 | 57 | 56 | 75 | 75 | 58 | 59 | 61 | 52 |
| | Tensile strength (MPa) | | 9.9 | 10.7 | 10.7 | 25.4 | 26.5 | 2.7 | 22.4 | 4.1 | 21.8 |
| | 100% modulus (MPa) | | 1.9 | 1.9 | 1.9 | 8.1 | 8.2 | 1.7 | 2.3 | 2.1 | 2.6 |
| | Elongation at break (%) | | 226 | 221 | 232 | 200 | 200 | 170 | 210 | 274 | 198 |

As shown in Table 1, in the case of using a composition comprising copolymer A (copolymer A1 or copolymer A2) being a fluorinated copolymer, a crosslinking agent, a crosslinking co-agent and an acid acceptor, it has been confirmed that, in the composition, if the content of the crosslinking agent is from 0.03 to 1.5 parts by mass to 100 parts by mass of the fluorinated copolymer and the content of the crosslinking co-agent is from 0.1 to 3.5 parts by mass to 100 parts by mass of the fluorinated copolymer, the obtainable crosslinked rubber is excellent in transparency (total light transmittance is at least 60%) and excellent also in tensile strength (tensile strength is at least 1.0 MPa) (Ex. 1-1 to Ex. 1-14).

Further, in Ex. 1-8 and Ex. 1-10 to Ex. 1-12, the amount of the acid acceptor was larger than in Ex. 1-7, whereby the crosslinking reaction proceeded evenly, and further, the amount of the acid acceptor was less than in Ex. 1-9, whereby microcrystals were less likely to form, and therefore, it was considered that the flexibility was excellent as compared to Ex. 1-7 and Ex. 1-9.

Whereas, as shown in Table 1, in the case of using copolymer A (copolymer A1 or copolymer A2) being a fluorinated copolymer, unless an acid acceptor was used in combination, the composition did not crosslink and could not be used as rubber, making it impossible to measure the various physical properties (Ex. 1-15 to Ex. 1-18).

As shown in Table 2, in the case of using a composition containing copolymer B (copolymer B1 or copolymer B2) being a fluorinated copolymer, a crosslinking agent, and a crosslinking co-agent, it has been confirmed that, in the composition, if the content of the crosslinking agent is from 0.03 to 0.7 parts by mass to 100 parts by mass of the fluorinated copolymer and the content of the crosslinking co-agent is from 0.1 to 2.5 parts by mass to 100 parts by mass of the fluorinated copolymer, the obtainable crosslinked rubber is superior in transparency (total light transmittance is at least 70%) and also superior in tensile strength (tensile strength is at least 5.0 MPa) (Ex. 2-1 to Ex. 2-3).

Whereas, as shown in Table 2, in the case of using copolymer B (copolymer B1 or copolymer B2) being a fluorinated copolymer, it has been confirmed that if at least one of the content of the crosslinking agent and the content of the crosslinking co-agent is outside the above range, at least one of the transparency and the tensile strength of the crosslinked rubber is insufficient. (Ex. 2-4 to Ex. 2-9).

The entire disclosure of Japanese Patent Application No. 2019-042727 filed on March 8, 2019 including specification, claims, drawings and summary is incorporated herein by reference in its entirety.

## Claims

1. A composition comprising a fluorinated copolymer, a crosslinking agent, a crosslinking co-agent and an acid acceptor, **characterized in that**
the fluorinated copolymer is a copolymer having units based on tetrafluoroethylene and units based on propylene,
in the composition, the content of the crosslinking agent is from 0.03 to 1.5 parts by mass to 100 parts by mass of the fluorinated copolymer, and
in the composition, the content of the crosslinking co-agent is from 0.1 to 3.5 parts by mass to 100 parts by mass of the fluorinated copolymer.

2. The composition according to Claim 1, wherein the acid acceptor is at least one member selected from the group consisting of zinc oxide, magnesium oxide, and a fatty acid metal salt represented by the following formula (A4):
(R^{A}COO⁻)ₙMⁿ⁺ (A4)
in the formula, R^{A} represents a C₁₀₋₃₀ organic group, n is an integer of 2 or 3, and M is an alkaline earth metal, Zn, Cd, Co, Sn, Cu, Pb, Ni or Al.

3. The composition according to Claim 1 or 2, wherein the fluorinated copolymer has iodine atoms, and
in the composition, the mass ratio of the content of the iodine atoms to the content of the crosslinking agent is from 0.20 to 4.0.

4. The composition according to any one of Claims 1 to 3, wherein the fluorinated copolymer has iodine atoms, and
in the composition, the mass ratio of the content of the iodine atoms to the content of the crosslinking co-agent is from 0.05 to 2.5.

5. The composition according to any one of Claims 1 to 4, wherein in the composition, the mass ratio of the content of the crosslinking agent to the content of the crosslinking co-agent is from 0.01 to 8.5.

6. Crosslinked rubber having the fluorinated copolymer in the composition as defined in any one of Claims 1 to 5 crosslinked.

7. A method for producing crosslinked rubber **characterized by** crosslinking a fluorinated copolymer in a composition comprising the fluorinated copolymer, a crosslinking agent, a crosslinking co-agent and an acid acceptor, wherein
the fluorinated copolymer is a copolymer having units based on tetrafluoroethylene and units based on propylene,
in the composition, the content of the crosslinking agent is from 0.03 to 1.5 parts by mass to 100 parts by mass of the fluorinated copolymer,
in the composition, the content of the crosslinking co-agent is from 0.1 to 3.5 parts by mass to 100 parts by mass of the fluorinated copolymer, and
the total light transmittance of the crosslinked rubber is from 60 to 100%.

8. A composition comprising a fluorinated copolymer, a crosslinking agent and a crosslinking co-agent, **characterized in that**
the fluorinated copolymer is a copolymer having units based on tetrafluoroethylene and units based on a perfluoro(alkyl vinyl ether),
in the composition, the content of the crosslinking agent is from 0.03 to 0.7 parts by mass to 100 parts by mass of the fluorinated copolymer, and
in the composition, the content of the crosslinking co-agent is from 0.1 to 2.5 parts by mass to 100 parts by mass of the fluorinated copolymer.

9. The composition according to Claim 8, wherein the fluorinated copolymer has iodine atoms, and
in the composition, the mass ratio of the content of the iodine atoms to the content of the crosslinking agent is from 0.3 to 1.2.

10. The composition according to Claim 8 or 9, wherein the fluorinated copolymer has iodine atoms, and
in the composition, the mass ratio of the content of the iodine atoms to the content of the crosslinking co-agent is from 0.3 to 1.2.

11. The composition according to any one of Claims 8 to 10, wherein in the composition, the mass ratio of the content of the crosslinking agent to the content of the crosslinking co-agent is from 0.4 to 7.

12. The composition according to any one of Claims 8 to 11, wherein in the composition, the total content of components other than the fluorinated copolymer is from 0.5 to 20 parts by mass to 100 parts by mass of the fluorinated copolymer.

13. Crosslinked rubber having the fluorinated copolymer in the composition as defined in any one of Claims 8 to 12 crosslinked.

14. A method for producing crosslinked rubber **characterized by** crosslinking a fluorinated copolymer in a composition containing the fluorinated copolymer, a crosslinking agent and a crosslinking co-agent, wherein
the fluorinated copolymer is a copolymer having units based on tetrafluoroethylene and units based on a perfluoro(alkyl vinyl ether),
in the composition, the content of the crosslinking agent is from 0.03 to 0.7 parts by mass to 100 parts by mass of the fluorinated copolymer,
in the composition, the content of the crosslinking co-agent is from 0.1 to 2.5 parts by mass to 100 parts by mass to the fluorinated copolymer, and
the total light transmittance of the crosslinked rubber is from 70 to 100%.
